# EUROPEAN PATENT APPLICATION

(11) **EP 3 560 936 A1**
(43) Date of publication of application: **30.10.2019**
(21) Application number: 18168978.7
(22) Date of filing: 24.04.2018
(51) Int. Cl.: C07F 9/02

(54) **METHOD FOR THE SYNTHESIS OF ALKENYL-PHOSPHOROUS COMPOUNDS**

(71) Applicant: Henkel AG & Co. KGaA, 40589 Düsseldorf (DE)
(72) Inventor: Schäfer, Sascha Wilhelm, 40822 Mettmann (DE); Zhao, Ligang, 40593 Düsseldorf (DE); Studer, Amido, 48149 Münster (DE)

(57) **Abstract**

The invention pertains to a method for the synthesis of specific alkenyl-phosphorous compounds according to formula (I) 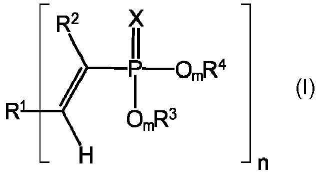 wherein
R¹ and R² are independently selected from hydrogen or a substituted or unsubstituted C₁₋₄₀ hydrocarbon group, whereby the group optionally contains at least one heteroatom, preferably O, N or S;
X is independently O or S;
R³ and R⁴ are independently selected from a substituted or unsubstituted C₁₋₄₀ hydrocarbon group, whereby the group optionally contains at least one heteroatom, preferably O, N or S;
m is independently 0 or 1; and
n is an integer from 1 to 4. Furthermore, the invention relates to compounds obtained by this method, and compositions comprising the compounds of the present invention, wherein the compositions are compositions for lighting applications, optical applications, microelectronic compounds, optical brighteners or are detergent compositions. Finally, the invention relates to the use of the compounds of the present invention in lighting lighting applications, optical applications microelectronic compounds, optical brighteners or detergent compositions.

## Description

The invention pertains to a method for the synthesis of specific alkenyl-phosphorous compounds according to formula (I), as defined herein. Furthermore, the invention relates to compounds obtained by this method, and compositions comprising the compounds of the present invention, wherein the compositions are compositions for lighting applications, optical applications, microelectronic compounds, optical brighteners or are detergent compositions. Finally, the invention relates to the use of the compounds of the present invention in lighting applications, optical applications, microelectronic compounds, optical brighteners, or detergent compositions.

Various synthesis methods for alkenyl-phosphorous compounds are known in the art. However, the presently known methods have drawbacks like the need for a transition metal catalyst. Such a method using alkenes as starting material is, for example, disclosed in Tanaka et al, J. Am. Chem. Soc. 2000, 122, 5407-5408. However, by employing a transition metal catalyst, the method is expensive because of the high costs for the catalyst, and additionally the catalyst has to be removed from the final product, which is labor intensive, requires time and creates additional costs. Moreover, such reactions, due to the catalysts, often have to be performed under inert gas atmosphere which requires rather sophisticated and expensive equipment.

Moreover, further methods using alkynes are known, which require rather harsh conditions, namely alkalinity and reaction temperatures of about 100 °C, as for example disclosed in Koenig et al, J. Org. Chem. 1997, 62, 2414-2422.

It was thus an object of the present invention to provide an improved method, which is less challenging and more environmentally friendly by reducing the overall energy consumption of the method, and preferably waste in form of solvents.

In this regard, the inventors of the present invention have surprisingly found that the afore-mentioned problems can be solved by the specific method of the present invention.

Therefore, in a first aspect, the present invention pertains to a method for the synthesis of a compound of formula (I): 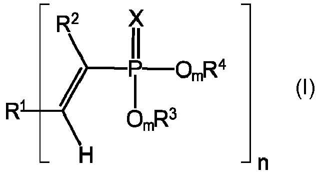 wherein
R¹ and R² are independently selected from hydrogen or a substituted or unsubstituted C₁₋₄₀ hydrocarbon group, whereby the group optionally contains at least one heteroatom, preferably O, N or S;
X is independently O or S;
R³ and R⁴ are independently selected from a substituted or unsubstituted C₁₋₄₀ hydrocarbon group, whereby the group optionally contains at least one heteroatom, preferably O, N or S;
m is independently 0 or 1; and
n is an integer from 1 to 4, preferably n is 1;
comprising or consisting of the steps:
   reacting a compound of formula (II) 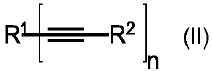 wherein R¹,R², and n are as defined in formula (I),
   with a compound of formula (III) 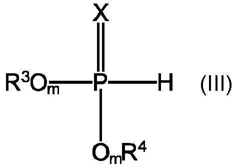 wherein
      R³, R⁴, and m are as defined in formula (I), and wherein
      the reaction is carried out in the presence of oxygen.

With this method, which is based on alkyne compounds as starting materials, neither a catalyst, harsh conditions nor a high reaction temperature is necessary. The improved method is thus cheaper, needs less process steps and is less energy consuming compared to the known processes.

In a second aspect, the invention refers to a compound obtainable by the method of the present invention.

In a further aspect, the invention pertains to composition comprising at least one compound obtainable by the method of the present invention or at least one compound of formula (I): 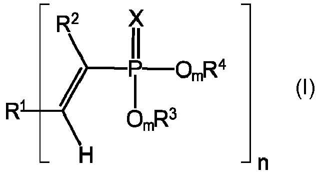 wherein
R¹ and R² are independently selected from hydrogen or a substituted or unsubstituted C₁₋₄₀ hydrocarbon group, whereby the group optionally contains at least one heteroatom, preferably O, N or S;
X is independently O or S;
R³ and R⁴ are independently selected from a substituted or unsubstituted C₁₋₄₀ hydrocarbon group, whereby the group optionally contains at least one heteroatom, preferably O, N or S;
m is independently 0 or 1; and
n is an integer from 1 to 4, preferably n is 1; and wherein the composition is a composition for lighting applications, optical applications, microelectronic compounds, optical brighteners, or is a detergent composition.

Exemplary lighting applications include LED or OLED. Exemplary optical applications are displays. A preferred field of use for optical brighteners are detergent formulations or polymer matrixes such as polyacrylates, epoxies, and hot melts for adhesive, molding and sealing applications.

Finally the use of at least one compound obtainable by the method of the present invention or of at least one compound of formula (I): 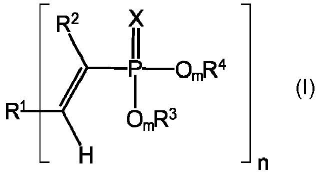 wherein
R¹ and R² are independently selected from hydrogen or a substituted or unsubstituted C₁₋₄₀ hydrocarbon group, whereby the group optionally contains at least one heteroatom, preferably O, N or S;
X is independently O or S;
R³ and R⁴ are independently selected from a substituted or unsubstituted C₁₋₄₀ hydrocarbon group, whereby the group optionally contains at least one heteroatom, preferably O, N or S;
m is independently 0 or 1; and
n is an integer from 1 to 4, preferably n is 1; in lighting applications, optical applications, microelectronic compounds, optical brighteners, or detergent compositions is an additional aspect of the present invention.

Further preferred embodiments are set forth in the appended claims.

In the following, the invention is described in greater detail. It is however understood that the present invention is not limited to the below embodiments.

In the present specification, the terms "a" and "an" and "at least one" are the same as the term "one or more".

"At least one" means one or more, i.e. 1, 2, 3, 4, 5, 6, 7, 8, 9, or more. "At least one", as used herein in relation to any component, refers to the number of chemically different molecules, i.e. to the number of different types of the referenced species, but not to the total number of molecules. For example, "at least one alkyne" means that at least one type of molecule falling within the definition for alkyne is used but that also two or more different molecule types falling within this definition can be present, but does not mean that only one molecule of said alkyne is present.

All percentages given herein in relation to the compositions or formulations relate to weight % relative to the total weight of the respective composition or formula, if not explicitly stated otherwise.

If a specific alkyl is disclosed, it is referred to all isomers of this alkyl, i.e. linear and branched isomers, if not explicitly stated otherwise. For example if the term "butyl" is disclosed, the term includes "n-butyl, iso-butyl, sec-butyl, and tert-butyl".

The term "essentially without solvent" means that in the reaction preferably less than 5 wt.-%, more preferably less than 1 wt.-%, most preferably less than 0.1 wt.-% or no solvent is present, based on the total weight of the composition.

In the compounds of formula (I) even though the group R¹ has been depicted as an (E) isomer, not only (E) isomers are claimed but (E) and (Z) isomers are encompassed, since the addition reaction is in general not stereoselective. Depending on the substituents, only (E) or (Z) isomers or mixtures of those can be present.

In the present invention, it is important that the reaction is carried out in the presence of oxygen; preferably at least 500 ppm, more preferably at least 10000 ppm of oxygen are present. In the most preferred embodiment the reaction is carried out in the presence of air.

The specific alkenyl-phosphorous compounds of the present invention are represented by formula (I): 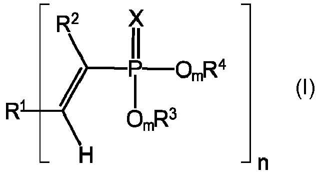 wherein
R¹ and R² are independently selected from hydrogen or a substituted or unsubstituted C₁₋₄₀ hydrocarbon group, whereby the group optionally contains at least one heteroatom, preferably O, N or S;
X is independently O or S;
R³ and R⁴ are independently selected from a substituted or unsubstituted C₁₋₄₀ hydrocarbon group, whereby the group optionally contains at least one heteroatom, preferably O, N or S;
m is independently 0 or 1; and
n is an integer from 1 to 4, preferably n is 1.

According to the present invention, the optional substituent of a group can be selected from -F, -Cl, -Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl.

In the following, preferred embodiments will be disclosed for the different groups of formulas (I) to (III). With regard to R¹ it is pointed out that in the following only the monovalent groups are explicitly mentioned which are present if n is 1. However, the respective multivalent groups are encompassed for R¹ as well. For example, if it is disclosed that R¹ can be methyl (n = 1), it is understood that the options of it being a methylene bridge (n = 2), methanetriyl (n = 3) and a fourfold substituted carbon atom (n = 4) are encompassed as well.

In a preferred embodiment R¹ and R² are independently selected from hydrogen or a group selected from methyl, ethyl, substituted or unsubstituted, branched, linear or cyclic C₃₋₄₀ alkyl, whereby the substituted or unsubstituted, branched, linear or cyclic C₃₋₄₀ alkyl group optionally contains at least one heteroatom, preferably O, N or S; allyl; substituted or unsubstituted branched, linear or cyclic C₃₋₄₀ alkenyl, whereby the substituted or unsubstituted branched, linear or cyclic C₃₋₄₀ alkenyl group optionally contains at least one heteroatom, preferably O, N or S; substituted or unsubstituted aryl, which optionally contains at least one heteroatom, preferably O, N or S, in its ring, wherein the at least one optional substituent of the afore-mentioned groups is selected from -F, -Cl, -Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl.

The term "aryl" as used in the present invention means a group which has an aromatic backbone or comprises several aromatic groups either directly or indirectly linked with each other, e.g. via an alkyl group. Examples are phenyl, naphthyl, anthryl, biphenyl, or triphenyl groups.

In a more preferred embodiment R² is hydrogen and/or R¹ is selected from a group selected from methyl, ethyl, substituted or unsubstituted, branched, linear or cyclic C₃₋₄₀ alkyl, whereby the substituted or unsubstituted, branched, linear or cyclic C₃₋₄₀ alkyl group optionally contains at least one heteroatom, preferably O, N or S; allyl; substituted or unsubstituted, branched, linear or cyclic C₄₋₄₀ alkenyl, whereby the cyclic C₄₋₄₀ alkenyl optionally contains at least one heteroatom, preferably O, N or S, in its ring; substituted or unsubstituted C₆₋₁₈ aryl, which optionally contains at least one heteroatom, preferably O, N or S, in its ring, wherein the at least one optional substituent of the afore-mentioned groups is selected from -F, -Cl, -Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl.

In an even more preferred embodiment R² is hydrogen and/or R¹ is selected from a group selected from methyl, ethyl, substituted or unsubstituted, branched, linear or cyclic C₃₋₁₅ alkyl, substituted or unsubstituted C₆₋₁₈ aryl, which optionally contains at least one heteroatom, preferably O, N or S, in its ring, wherein the at least one optional substituent of the afore-mentioned groups is selected from -F,-Cl, -Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl.

In an especially preferred embodiment, R² is hydrogen and/or R¹ is a group selected from methyl, ethyl, propyl, butyl, pentyl, hexyl, in particular the linear isomers thereof, ethylether, methylether, propylether, butylether, ethyl diether, propyl diether, butyl diether, ethyl triether, propyl triether, butyl triether, phenyl, methoxycarbonyl, ethoxycarbonyl, propoxycarbonyl, butoxycarbonyl, pentoxycarbonyl, hexoxycarbonyl, methylene methylamine, methylene ethylamine, methylene propylamine, methylene butylamine, methylene dimethyldiamine, methylene diethyldiamine, methylene dipropyl diamine, methylene dibutyl diamine, methylene triamine, methylene mono-, di-, tri-methyl triamine, methylene mono-, di-, tri-ethyl triamine, methylene mono-, di-, tri-propyl triamine, methylene mono-, di-, tri-butyl triamine, methylene oxycarboxymethyl, methylene oxycarboxyethyl, methylene oxycarboxybutyl, methylene aminocarboxymethyl, methylene aminocarboxyethyl, methylene aminocarboxybutyl and their mixtures.

In further preferred embodiments R³ and R⁴ are independently selected from a group selected from methyl, ethyl, substituted or unsubstituted, branched, linear or cyclic C₃₋₄₀ alkyl, whereby the substituted or unsubstituted, branched, linear or cyclic C₃₋₄₀ alkyl group optionally contains at least one heteroatom, preferably O, N or S; allyl; substituted or unsubstituted, branched, linear or cyclic C₃₋₄₀ alkenyl, whereby the substituted or unsubstituted, branched, linear or cyclic C₃₋₄₀ alkenyl group optionally contains at least one heteroatom, preferably O, N or S; substituted or unsubstituted aryl, which optionally contains at least one heteroatom, preferably O, N or S, in its ring, wherein the at least one optional substituent of the afore-mentioned groups is selected from -F, -Cl, -Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl. This limitation is in particular preferred in combination with any of the above-mentioned embodiments of R¹ and R².

In an even more preferred embodiment R³ and R⁴ are independently selected from a group selected from methyl, ethylene, substituted or unsubstituted, branched, linear or cyclic C₃₋₁₅ alkyl, substituted or unsubstituted C₆₋₁₈ aryl, which optionally contains at least one heteroatom, preferably O, N or S, in its ring, wherein the at least one optional substituent of the afore-mentioned groups is selected from -F, -Cl, -Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl. This limitation is particularly preferred in combination with any of the above-mentioned embodiments of R¹ and R².

Especially preferred groups of R³ and R⁴ are methyl, ethyl, propyl, butyl, pentyl, hexyl, in particular the linear isomers thereof, phenyl, biphenyl, and triphenyl. In an especially preferred embodiment R³ is hydrogen, methyl, ethyl, propyl, butyl, hexyl, heptyl, octyl, nonyl, decyl, phenyl, heteroaryl containing N,S,O (e.g. pyridinyl, imidazoyl, oxazoyl, thiophenyl, furanyl) with and without substituents such as aryl, OH, CN, NH₂, N(alkyl)₂, OMe, OEt, COMe, COEt, CO₂Me, CO₂Et, CONMe₂, CONEt₂, NO₂, SO₃H, SO₃Na, SOalkyl, PO₄H₂, PO₄Na₂, S-Alkyl, S-Aryl, or their mixtures, and/or R⁴ is phenyl, biphenyl, triphenyl, condensed carbon-cycles such as naphthyl, anthracenyl, pyrenyl etc., heteroaryl containing N,S,O (e.g. pyridin, imidazol, oxazol, thiophen, furan), all with and without substituents such as aryl, OH, CN, NH2, N(alkyl)₂, OMe, OEt, COMe, COEt, CO₂Me, CO₂Et, CONMe₂, CONEt₂, NO₂, SO₃H, SO₃Na, SOalkyl, PO₄H₂, PO₄Na₂, S-Alkyl, S-Aryl or their mixtures. This limitation is particularly preferred in combination with any of the above-mentioned embodiments of R¹ and R². It is especially preferred that R³ and R⁴ are both the same.

In most preferred embodiments in addition to the restriction of any one of the above-mentioned embodiments in view of R¹ and R² and/or R³ and R⁴, n is 1 to 3, more preferably 1 or 2, most preferably 1.

In most preferred embodiments in addition to the restriction of any one of the above-mentioned embodiments in view of R¹ and R², and/or R³ and R⁴, and/or n, both m are 0 or 1, preferably 0.

In further most preferred embodiments in addition to the restriction of any one of the above-mentioned embodiments in view of R¹ and R², and/or R³ and R⁴, and/or n and/or m, X is preferably O.

With regard to the optional substituent of the afore-mentioned groups, they are selected from -F, -Cl, -Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl.

In order to obtain the preferred embodiments for the compounds of formula (I) as disclosed above, the substituents in the starting materials, i.e., compounds of formula (II) and formula (III) are the same as stated above, respectively.

In the method according to the present invention, the reaction can be performed in an organic solvent, preferably a C₂₋₁₂ alcohol, a C₂₋₁₂ ether, toluene, dimethyl sulfoxide, acetone, benzene, dichloromethane, a mixture thereof or essentially without solvents. It is especially preferred that essentially no solvent is used.

In the method according to the present invention, the reaction is preferably performed at 20 to 150°C, preferably at 20 to 80 °C, more preferably 20 to 75 °C, most preferably 20 to 40 °C.

Furthermore, the reaction is preferably performed for 1 minute to 1 month, more preferably 1 hour to 72 hours, most preferably 5 hours to 12 hours.

Moreover, the reaction is preferably performed in excess of the at least one compound of formula (II), preferably the equivalent ratio of compounds of formula (II) to compounds of formula (III) is at least 1:1, more preferably 2:1, even more preferably 4:1, most preferably 6:1. This is preferred in order to facilitate that the addition to the triple bond of compounds of formula (II) leads to a substituted double bond, as present in compounds of formula (I).

In a further preferred embodiment the at least one compound of formula (II) is distilled prior to use.

In compositions comprising at least one compound obtainable by the method of the present invention or at least one compound of formula (I): 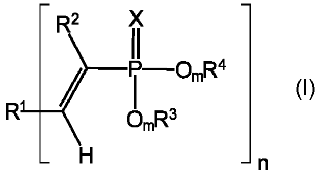 wherein
R¹ and R² are independently selected from hydrogen or a substituted or unsubstituted C₁₋₄₀ hydrocarbon group, whereby the group optionally contains at least one heteroatom, preferably O, N or S;
X is independently O or S;
R³ and R⁴ are independently selected from a substituted or unsubstituted C₁₋₄₀ hydrocarbon group, whereby the group optionally contains at least one heteroatom, preferably O, N or S;
m is independently 0 or 1; and
n is an integer from 1 to 4, preferably n is 1; and wherein the composition is a composition for lighting applications, optical applications, microelectronic compounds, optical brighteners or a detergent composition, it is preferred that the compounds are present in 0.001 to 5 wt.-%, preferably 0.01 to 2 wt.-%, based on the total weight of the composition. This is in particular preferable, if the composition is an optical brightener or a detergent composition.

The invention is further illustrated by the following, non-limiting examples.

### Examples

### Example 1: Preparation of (E)-methyl 3-(diphenylphosphoryl)acrylate (4a) and (Z)-methyl 3-(diphenylphosphoryl)-acrylate (4b):

In a vial (3 mL) diphenylphosphine oxide (100 mg, 494 µmol) and methyl propiolate (83.0 mg, 988 µmol) were stirred for eight days at room temperature. The crude reaction product was subjected to column chromatography (silica gel; Pentane:EE; 1:2) to afford 4a (49.0 mg, 171 µmol, 35%) and 4b (24.0 mg, 83.8 µmol, 17%) as a colorless solids. 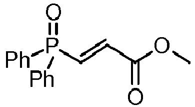
4a: R*_{f}* = 0.20 (Pentane:EE; 1:1).
FTIR (film): *ṽ* = 3055, 3001, 1724, 1437, 1302, 1241, 1184, 1120, 999, 803, 693 cm⁻¹.
¹H-NMR (300 MHz, CDCl₃): δ = 7.75 - 7.64 (m, 4H, Ar-*H*), 7.61 - 7.43 (m, 7H, C*H*, Ar-*H*), 6.81 (t, *J* = 17.3 Hz, 1H, C*H*), 3.79 (s, 3H, C*H*₃) ppm.
¹³C-NMR (75 MHz, CDCl₃): δ = 52.3 (CH₃) 128.8 (d, *J* = 12.4 Hz, 4C, CH), 131.3 (d, *J* = 10.1 Hz, 4C, CH), 131.2 (d, *J* = 107.3 Hz, 2C, C), 132.4 (d, *J* = 2.8 Hz, 2C, CH) 136.4 (d, *J* = 4.2 Hz, CH), 138.2 (d, *J* = 93.9 Hz, CH), 165.0 (d, *J* = 21.3 Hz, C) ppm.
³¹P-NMR (162 MHz, CDCl₃) δ = 22.1 ppm. MS (ESI): 309 ([M+Na]⁺, 100%), 595 ([2M+Na]⁺, 61%), 881 ([3M+Na]⁺, 34%). HRMS (ESI) Exact mass calculated for C₁₆H₁₅O₃PNa ([M+Na]⁺): 309.0651, found: 309.0650. m.p.: 134-136° C.

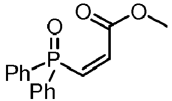

4b: R*_{f}* = 0.09 (Pentane:EE; 1:1).
FTIR (film): *ṽ* = 3014, 2955, 1731, 1435, 1231, 1163, 1119, 992, 885, 721, 691 cm⁻¹.
¹H-NMR (300 MHz, CDCl₃): δ = 7.81 - 7.70 (m, 4H, Ar-*H*), 7.57 - 7.41 (m, 7H, Ar-*H*), 6.88 - 6.67 (m, 2H, C*H*), 3.50 (s, 3H, C*H₃*) ppm.
¹³C-NMR (75 MHz, CDCl₃): δ = 51.9 (CH₃) 128.6 (d, *J* = 12.4 Hz, 4C, CH), 131.0 (d, *J* = 10.0 Hz, 4C, CH), 131.8 (d, *J* = 2.8 Hz, 2C, CH), 132.9 (d, *J* = 108.0 Hz, C, 2C), 135.36 (d, *J* = 92.1 Hz, CH), 137.3 (d, *J* = 2.7 Hz, CH), 164.8 (d, *J* = 8.2 Hz, C) ppm.
³¹P-NMR (122 MHz, CDCl₃) δ = 20.4 ppm.
MS (ESI): 309 ([M+Na]⁺, 67%), 595 ([2M+Na]⁺, 100%).
HRMS (ESI) Exact mass calculated for C₁₆H₁₅O₃PNa ([M+Na]⁺): 309.0651, found: 309.0635. m.p.: 102-104° C.

### Example 2: Preparation of E/Z-diethyl[(-oct-1-en-1-yl)]phosphane oxide (4c)

In a vial (3 mL) diethylphosphine oxide (100 mg, 943 µmol) and 1-octyne (208 mg, 1.89 mmol) were stirred for 33 days at 80°C. The crude reaction product was subjected to column chromatography (silica gel; DCM:MeOH; 30:1) to afford 4c (100 mg, 462 µmol, 49%) as colorless oil. 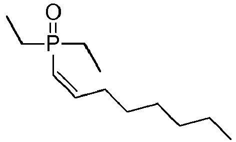
4c: R*_{f}* = 0.07 (DCM:MeOH; 30:1).
FTIR (film): *ṽ* = 3415, 2926, 2856, 1624, 1459, 1266, 1164, 1036, 703, 632 cm⁻¹.
MS (ESI): 217 ([M+H]⁺, 13%), 239 ([M+Na]⁺, 7%) 455 ([2M+Na]⁺, 100%).
HRMS (ESI) Exact mass calculated for C₁₂H₂₅OPNa ([M+Na]⁺): 239.15352, found: 239.15281.

### Example 3: Addition of diphenylphosphine oxide to several alkynes (Entries 1 and 5 to 9 are according to the invention)

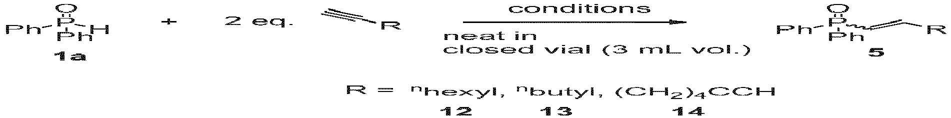

| Entry | alkene | time | temp | atmosphere | product | yield [%] |
|---|---|---|---|---|---|---|
| 1 | 12^{[1]} | 16 h | 80 °C | air | 5a | 37 |
| 2 | 12^{[1]} | 16 h | r.t. | argon | 5a | 0 |
| 3^{[2]} | 12^{[1]} | 16 h | r.t. | argon | 5a | 0 |
| 4 | 12^{[1]} | 16 h | 80 °C | argon | 5a | traces |
| 5 | 12^{[1]} | 23 h | r.t. | balloon of air | 5a | 80^{[3]} |
| 6 | 12^{[1]} | 3 d | r.t. | balloon of air | 5a | 50 |
| 7 | 12^{[1]} | 5 d | r.t. | air | 5a | 82^{[3]} |
| 8^{[2]} | 12^{[1]} | 5 d | r.t. | air | 5a | 83^{[3]} |
| 9 | 12^{[4]} | 42.5 h | r.t. | air | 5a | 62^{[3]} |

| | | | | | | |
|---|---|---|---|---|---|---|
| ^{[1]} Alkyne not distilled. ^{[2]} Exclusion of light. ^{[3]} Conversion of phosphine oxide. ^{[4]} 10 equiv. of 12 used. | | | | | | |

As can be seen from comparative examples of entries 2 to 4, the presence of oxygen is mandatory in order to successfully perform the method.

### Example 4: Conversion of diphenylphosphine oxide over time

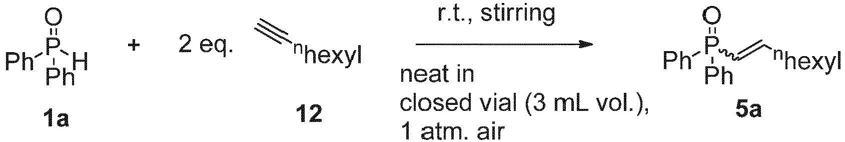

| Entry | Time [h] | Conversion [%] |
|---|---|---|
| 1 | 15,5 | 51 |
| 2 | 40,5 | 72 |
| 3 | 70 | 82 |
| 4 | 98 | 83 |
| 5 | 140,5 | 88 |

It can be seen that most of the product is already formed within 50 hours reaction time and after that, in order to gain 20% more, the reaction time has to be doubled. From an economical viewpoint it is thus can be preferred to stop the reaction after 50 hours.

### Example 5: Reaction of phosphine oxides with several alkynes

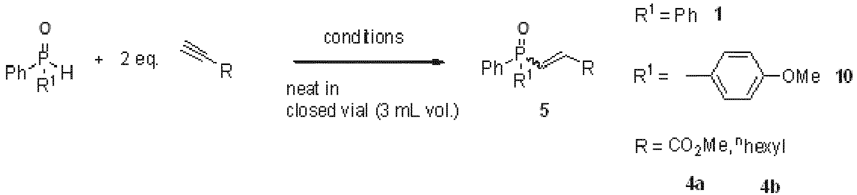

| Entry | P-compd | alkyne | time | temp. | solv. | atm. | prod. | ratio **1** : **5**^{[1]} | yield [%] |
|---|---|---|---|---|---|---|---|---|---|
| 1 | 1 | 4b | 5 d | r.t. | - | air | 5b | 1:4.5 | n.d. |
| 2 | 1 | 4b | 23 h | r.t. | - | balloon of air | 5b | 1:4 | n.d. |
| 3 | 1 | 4b | 16 h | 80 °C | - | air | 5b | n.d. | 37 |
| 4 | 1 | 4a | 4 d | r.t. | - | air | 5a | 1:9 | n.d. |
| 5 | 1 | 4a | 8 d | r.t. | - | air | 5a | n.d. | 52 |
| 6 | 10 | 4b | 2d | r.t. | DCM | air | 5c | 1:>29^{[2]} | n.d. |
| 7 | 10 | 4a | 42 h | r.t. | - | air | 5d | 1:0.47^{[2]} | n.d. |

| | | | | | | | | | |
|---|---|---|---|---|---|---|---|---|---|
| n.d. = not determined | | | | | | | | | |

## Claims

1. A method for the synthesis of a compound of formula (I): 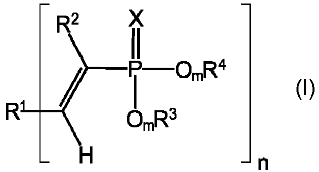 wherein
R¹ and R² are independently selected from hydrogen or a substituted or unsubstituted C₁₋₄₀ hydrocarbon group, whereby the group optionally contains at least one heteroatom, preferably O, N or S;
X is independently O or S;
R³ and R⁴ are independently selected from a substituted or unsubstituted C₁₋₄₀ hydrocarbon group, whereby the group optionally contains at least one heteroatom, preferably O, N or S;
m is independently 0 or 1; and
n is an integer from 1 to 4;
comprising or consisting of the steps:
reacting a compound of formula (II) 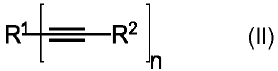 wherein R¹,R², and n are as defined in formula (I),
with a compound of formula (III) 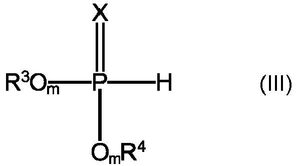 wherein
R³, R⁴, and m are as defined in formula (I), and wherein
the reaction is carried out in the presence of oxygen.

2. The method according to claim 1, wherein R¹ and R² are independently selected from hydrogen or a group selected from methyl ,ethyl, substituted or unsubstituted, branched, linear or cyclic C₃₋₄₀ alkyl, whereby the substituted or unsubstituted, branched, linear or cyclic C₃₋₄₀ alkyl group optionally contains at least one heteroatom, preferably O, N or S; allyl; substituted or unsubstituted, branched, linear or cyclic C₃₋₄₀ alkenyl, whereby the substituted or unsubstituted, branched, linear or cyclic C₃₋₄₀ alkenyl group optionally contains at least one heteroatom, preferably O, N or S; substituted or unsubstituted aryl, which optionally contains at least one heteroatom, preferably O, N or S, in its ring, wherein the at least one optional substituent of the afore-mentioned groups is selected from -F, -Cl, -Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl.

3. The method according to claim 1 or 2, wherein R³ and R⁴ are independently selected from a group selected from methyl, ethyl, substituted or unsubstituted, branched, linear or cyclic C₃₋₄₀ alkyl, whereby the substituted or unsubstituted, branched, linear or cyclic C₃₋₄₀ alkyl group optionally contains at least one heteroatom, preferably O, N or S; allyl; substituted or unsubstituted, branched, linear or cyclic C₃₋₄₀ alkenyl, whereby the substituted or unsubstituted, branched, linear or cyclic C₃₋₄₀ alkenyl group optionally contains at least one heteroatom, preferably O, N or S; substituted or unsubstituted aryl, which optionally contains at least one heteroatom, preferably O, N or S, in its ring, wherein the at least one optional substituent of the afore-mentioned groups is selected from -F, -Cl, -Br, =O, -NH₂, -NHR⁵, with R⁵ being a C₁₋₁₆ alkyl, preferably a C₁₋₄ alkyl,-NR⁵R⁶, with R⁵ being a C₁₋₁₆ alkyl, preferably a C₁₋₄ alkyl and R⁶ being a C₁₋₄ alkyl, -COOH,-C(=O)H, -C(=O)OR⁷ with R⁷ being a C₁₋₁₆ alkyl, preferably a C₁₋₆ alkyl.

4. The method according to any one of claims 1 to 3, wherein the reaction is performed in an organic solvent, preferably a C₂₋₁₂ alcohol, a C₂₋₁₂ ether, toluene, dimethyl sulfoxide, acetone, benzene, dichloromethane, a mixture thereof or essentially without solvents.

5. The method according to any one of claims 1 to 4, wherein the reaction is performed at 20 to 150°C, preferably at 20 to 80 °C, more preferably 20 to 75 °C, most preferably 20 to 40 °C.

6. The method according to any one of claims 1 to 5, wherein the reaction is performed for 1 minute to 1 month, preferably 1 hour to 72 hours, more preferably 5 hours to 50 hours.

7. The method according to any one of claims 1 to 6, wherein the reaction is performed in excess of the at least one compound of formula (II), preferably the equivalent ratio of compounds of formula (II) to compounds of formula (III) is at least 2:1, more preferably at least 4:1, most preferably 6:1.

8. A compound obtainable by the method of any one of claims 1 to 7.

9. A composition comprising at least one compound according to claim 8 or at least one compound of formula (I): 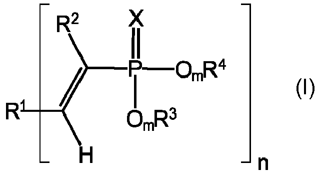 wherein
R¹ and R² are independently selected from hydrogen or a substituted or unsubstituted C₁₋₄₀ hydrocarbon group, whereby the group optionally contains at least one heteroatom, preferably O, N or S;
X is independently O or S;
R³ and R⁴ are independently selected from a substituted or unsubstituted C₁₋₄₀ hydrocarbon group, whereby the group optionally contains at least one heteroatom, preferably O, N or S;
m is independently 0 or 1; and
n is an integer from 1 to 4; and wherein the composition is a composition for lighting applications, optical applications, microelectronic compounds, optical brighteners or is a detergent composition.

10. The composition according to claim 9, wherein R¹ and R² are independently selected from hydrogen or a group selected from methyl ,ethyl, substituted or unsubstituted, branched, linear or cyclic C₃₋₄₀ alkyl, whereby the substituted or unsubstituted, branched, linear or cyclic C₃₋₄₀ alkyl group optionally contains at least one heteroatom, preferably O, N or S; allyl; substituted or unsubstituted, branched, linear or cyclic C₃₋₄₀ alkenyl, whereby the substituted or unsubstituted, branched, linear or cyclic C₃₋₄₀ alkenyl group optionally contains at least one heteroatom, preferably O, N or S; substituted or unsubstituted aryl, which optionally contains at least one heteroatom, preferably O, N or S, in its ring, wherein the at least one optional substituent of the afore-mentioned groups is selected from -F, -Cl, -Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl.

11. The composition according to claim 9 or 10, wherein R³ and R⁴ are independently selected from a group selected from methyl, ethyl, substituted or unsubstituted, branched, linear or cyclic C₃₋₄₀ alkyl, whereby the substituted or unsubstituted, branched, linear or cyclic C₃₋₄₀ alkyl group optionally contains at least one heteroatom, preferably O, N or S; allyl; substituted or unsubstituted, branched, linear or cyclic C₃₋₄₀ alkenyl, whereby the substituted or unsubstituted, branched, linear or cyclic C₃₋₄₀ alkenyl group optionally contains at least one heteroatom, preferably O, N or S; substituted or unsubstituted aryl, which optionally contains at least one heteroatom, preferably O, N or S, in its ring, wherein the at least one optional substituent of the afore-mentioned groups is selected from -F, -Cl, -Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl.

12. The use of at least one compound according to claim 8 or at least one compound of formula (I): 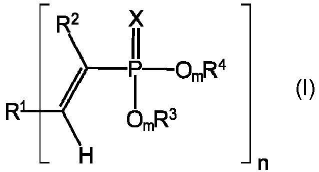 wherein
R¹ and R² are independently selected from hydrogen or a substituted or unsubstituted C₁₋₄₀ hydrocarbon group, whereby the group optionally contains at least one heteroatom, preferably O, N or S;
X is independently O or S;
R³ and R⁴ are independently selected from a substituted or unsubstituted C₁₋₄₀ hydrocarbon group, whereby the group optionally contains at least one heteroatom, preferably O, N or S;
m is independently 0 or 1; and
n is an integer from 1 to 4; in lighting applications, optical applications, microelectronic compounds, optical brighteners or detergent compositions.

13. The use according to claim 12, wherein R¹ and R² are independently selected from hydrogen or a group selected from methyl ,ethyl, substituted or unsubstituted, branched, linear or cyclic C₃₋₄₀ alkyl, whereby the substituted or unsubstituted, branched, linear or cyclic C₃₋₄₀ alkyl group optionally contains at least one heteroatom, preferably O, N or S; allyl; substituted or unsubstituted, branched, linear or cyclic C₃₋₄₀ alkenyl, whereby the substituted or unsubstituted, branched, linear or cyclic C₃₋₄₀ alkenyl group optionally contains at least one heteroatom, preferably O, N or S; substituted or unsubstituted aryl, which optionally contains at least one heteroatom, preferably O, N or S, in its ring, wherein the at least one optional substituent of the afore-mentioned groups is selected from -F, -Cl, -Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl.

14. The use according to claim 12 or 13, wherein R³ and R⁴ are independently selected from a group selected from methyl, ethyl, substituted or unsubstituted, branched, linear or cyclic C₃₋₄₀ alkyl, whereby the substituted or unsubstituted, branched, linear or cyclic C₃₋₄₀ alkyl group optionally contains at least one heteroatom, preferably O, N or S; allyl; substituted or unsubstituted, branched, linear or cyclic C₃₋₄₀ alkenyl, whereby the substituted or unsubstituted, branched, linear or cyclic C₃₋₄₀ alkenyl group optionally contains at least one heteroatom, preferably O, N or S; substituted or unsubstituted aryl, which optionally contains at least one heteroatom, preferably O, N or S, in its ring, wherein the at least one optional substituent of the afore-mentioned groups is selected from -F, -Cl, -Br, =O, -NH₂, -NHR⁵, with R⁵ being a C₁₋₁₆ alkyl, preferably a C₁₋₄ alkyl,-NR⁵R⁶, with R⁵ being a C₁₋₁₆ alkyl, preferably a C₁₋₄ alkyl and R⁶ being a C₁₋₄ alkyl, -COOH,-C(=O)H, -C(=O)OR⁷ with R⁷ being a C₁₋₁₆ alkyl, preferably a C₁₋₆ alkyl.
